# DEMANDE DE BREVET EUROPEEN

(11) **EP 2 048 575 A1**
(43) Date de publication de la demande: **15.04.2009**
(21) Numéro de dépôt: 08166135.7
(22) Date de dépôt: 08.10.2008
(51) Int. Cl.: G06F 9/44, G06F 3/048

(54) **Procédé pour élaborer une application graphique interactive multi-entrées**

(30) Priorité: 08.10.2007 FR 0758148
(71) Demandeur: Ecole Nationale de l'Aviation Civile, 31055 Toulouse Cedex (FR); Intuilab, 31672 Labege Cedéx (FR)
(72) Inventeur: Chatty, Stéphane, 31400 Toulouse (FR); Mertz, Christophe, 31130, Balma (FR)
(74) Mandataire: Pontet, Bernard

(57) **Abrégé**

L'invention concerne un procédé pour élaborer une application graphique interactive destinée à gérer une surface interactive, cette surface acceptant une pluralité de dispositifs d'entrée ; dans lequel procédé :
on élabore l'architecture de la dite application graphique interactive en tant qu'un arbre, dit arbre local, comprenant des noeuds et des éléments, la communication entre éléments se faisant par échange d'événements,
on élabore la communication entre l'application graphique interactive et son environnement extérieur en considérant que cet environnement extérieur possède également une architecture d'arbre, dit arbre général, et
on élabore les dispositifs d'entrée en tant que des éléments extérieurs à l'arbre local

## Description

La présente invention se rapporte à un procédé pour élaborer une application graphique interactive multi-entrées. Elle s'applique particulièrement à une surface interactive comprenant un écran tactile et intelligent. D'une façon générale, l'écran d'une surface interactive permet d'afficher des objets graphiques que plusieurs utilisateurs peuvent manipuler simultanément (déplacer, redimensionner, fusionner, ouvrir, fermer,...) à l'aide de leurs doigts directement sur l'écran ou par l'intermédiaire de stylets ou tous autres dispositifs permettant de désigner un emplacement sur l'écran avec ou sans contact de l'écran. Mais la présente invention peut s'appliquer à tout périphérique interactif apte à recevoir plusieurs dispositifs d'entrées en parallèle.

Pour la surface interactive, par dispositif d'entrée, on entend le toucher de l'écran par un utilisateur ou tout autre dispositif permettant de désigner un emplacement sur l'écran avec ou sans contact de l'écran, par exemple de objets marqués et identifiés par la surface.

Le développement d'interface utilisateur pour des surfaces interactives est à la fois très similaire au développement d'interface utilisateur d'ordinateur de bureau ou d'écran tactile, et à la fois très différent. Les similitudes sont évidentes : indépendamment des questions d'orientation les graphiques sont les mêmes, et il n'y a aucune raison pour que l'interaction avec un simple doigt sur une surface interactive soit différente de l'interaction sur un écran tactile. Par conséquent, la réutilisation de composants interactifs développés pour une entrée unique (souris, écran tactile) est un souhait légitime. Mais, il y a des différences, et les plus évidentes ne sont pas toujours les plus importantes. La plus évidente est la capacité de manipuler de multiple flux d'entrée, bien qu'il ne soit pas si différent de la manipulation de l'animation en parallèle d'une interaction. Il est moins courant d'être capable de manipuler un nombre variable de points de contact, ou bien la structure hiérarchique implicite des dispositifs qui ont à la fois une détection multi-touches et multi-utilisateurs. Ensuite, le rapport entre le système graphique et le système d'entrée (souvent appelé «picking ») doit être rendu extensible. Les différences entre appareils doivent également être explicitées : certains font de l'identification d'utilisateur mais pas la corrélation entre des coordonnées X et Y des points de contact, d'autres sont limitées à deux désignateurs, etc. En outre, les périphériques multi-touches sont encore coûteux et les développeurs doivent souvent les simuler avec des souris parce qu'ils ne peuvent pas facilement avoir accès aux périphériques pour des tests unitaires. Enfin, des moyens doivent être fournis aux programmeurs pour la conception de modèles d'interaction qui combinent plusieurs flux d'entrées.

Un autre but de l'invention est un nouveau système peu onéreux permettant un développement rapide.

On atteint au moins l'un des buts précités avec un procédé pour élaborer une application graphique interactive destinée à gérer un périphérique interactif, cet périphérique interactif acceptant une pluralité de dispositif d'entrée ; dans lequel procédé :
on élabore l'architecture de la dite application graphique interactive en tant qu'une structure de données, dite structure locale, comprenant des noeuds et des éléments, la communication entre éléments se faisant par échange d'événements,
on élabore la communication entre l'application graphique interactive et son environnement extérieur en considérant que cet environnement extérieur possède également une architecture du même type que ladite structure de données, dite structure générale, et
on élabore les dispositifs d'entrée en tant que des éléments extérieurs à la structure locale.

Avec le procédé selon la présente invention, on fait le choix d'une programmation réactive ou par événement. L'application réagit à ce qui se passe dans son environnement.

Dans la plupart des interfaces utilisateur, les dispositifs d'entrée peuvent demeurer implicites dans le code. Dans des interfaces utilisateur de type WIMP ("Windows-Icon-Mouse-Pointing"), par exemple, les programmeurs s'abonnent habituellement aux types d'événement qui sont liés à la souris ou à d'autres qui sont liés au clavier : aucun besoin de présenter toute autre référence au clavier ou à la souris. Si l'un manque, le programme ne fonctionne pas; s'il y a d'autres dispositifs, soit ils peuvent être ignorés sans risque soit le système d'exploitation parvient à les mélanger afin d'émuler une souris et un clavier. Sur une surface interactive, la multiplicité est la règle et on veut pouvoir distinguer des dispositifs : « Je veux souscrire aux contacts de cet utilisateur », ou « je veux souscrire aux contacts de n'importe quel utilisateur, puis aux mouvements de l'utilisateur qui vient juste de toucher la surface », etc. La communication d'événement selon la présente invention offre un cadre pour cela : on a juste besoin d'avoir différentes sources d'événement représentant différentes entrées parmi lesquelles on veut choisir, ou une source avec un format approprié de spécification d'événement.

De préférence, ladite structure de données est un arbre. Mais il peut aussi être un graphe, une base de données ou toute autre structure de données.

Selon la présente invention, les dispositifs d'entrée sont des éléments, mais des éléments qui sont placés en dehors de la structure de donnés de l'application interactive. En déclarant que les dispositifs sont des éléments, cela permet au programmeur de les mettre en référence et permet la manipulation de nouveaux flux d'entrées. En déclarant qu'ils sont en dehors de la structure locale, cela implique le fait que le programmeur ne commande pas leur existence : ce sont des éléments contextuels qui peuvent ou peuvent ne pas être là, et il appartient au programmeur de les requérir. Ce modèle s'applique en fait à plusieurs ressources qui sont externes à l'application interactive : les ressources du système d'exploitation, d'autres applications, la capture de contexte, etc. Les utilisateurs interagissent avec un système représenté par un grand arbre, dont une partie représente l'application interactive.

Une caractéristique de systèmes multi-touches ou multi-utilisateurs est la « dynamicité » (« dynamicity » en anglais) de l'entrée. Le nombre de points de contact ou de pointeurs commence habituellement à zéro lorsque le système démarre. Il augmente alors dès qu'un nouvel utilisateur commence à interagir, un nouveau doigt atterri sur la surface ou un nouveau pointeur est utilisé. Quand cela se produit, le programmeur souhaite habituellement qu'un nouveau « feedback » et probablement que de nouveaux comportements soient ajoutés à l'interface utilisateur. Cette situation est très semblable à l'ajout d'un nouveau dispositif, par exemple d'une nouvelle souris, à l'ordinateur.

Selon une caractéristique avantageuse de l'invention, l'application graphique interactive est conçue de telle sorte que l'apparition et la disparition d'un dispositif d'entrée est équivalent à l'apparition ou la disparition d'un noeud de la structure générale. Ce mécanisme représente la « dynamicité », le caractère de ce qui dynamique (« dynamicity » en langue anglaise) de l'application interactive.

La dynamicité des utilisateurs et des points de contact est alors semblable à une connexion à chaud.

Selon l'invention, au sein de l'application graphique interactive, le périphérique interactif et ses dispositifs d'entrée sont considérés comme regroupés au sein d'une sous structure de la structure générale. Ce mécanisme permet notamment de considérer le périphérique interactif et ses dispositifs d'entrée comme un périphérique complexe.

Selon une caractéristique avantageuse de l'invention, on réalise une encapsulation d'un noeud supportant au moins un dispositif d'entrée de sorte que l'environnement extérieur à ce noeud encapsulé ne voit qu'une partie des propriétés dudit au moins un dispositif d'entrée.

Le mécanisme d'encapsulation permet au programmeur d'un composant de choisir quelles propriétés et filiation du composant sont visibles de l'extérieur, et sous quels noms. Les programmeurs qui utilisent un élément peuvent énumérer ses propriétés exportées, fils et événements.

Selon une caractéristique avantageuse de l'invention, on réalise un filtrage d'un noeud comprenant plusieurs éléments de façon à modifier les événements échangés entre les éléments compris dans ce noeud filtré et l'environnement extérieur à ce noeud filtré.

Ce mécanisme de filtrage utilise le fait que tous les éléments peuvent être des sources d'événement pour avoir une organisation semblable aux connexions de flux de données : un élément se tient comme frontal pour un autre élément et agit en tant que relais pour des abonnements d'événement.

A titre d'exemple, pour une communication avec des éléments distants hors arbre général, on transmet des événements via un bus de messagerie.

En effet, des concepteurs d'interaction souhaitent parfois accéder à des dispositifs d'entrée à travers des communications interprocessus. Ceci peut se produire parce que le dispositif est effectivement à distance, par exemple lors d'une expérimentation avec deux surfaces à distance couplées à un système de vidéoconférence. Ceci peut se produire lorsqu'aucun pilote n'est encore disponible pour un dispositif d'un périphérique donné sur la plateforme cible. Ou lorsqu'une application donnée a été conçue sans support pour changer la configuration, et la configuration doit être adaptée depuis l'extérieur. Pour ces situations, la présente invention permet le transport des événements par des bus de message tels que le bus Ivy Software ou Open Sound Control®.

Avantageusement, selon l'invention, on sauvegarde au sein de la structure locale l'état des éléments faisant partie de cette structure locale, chaque structure locale pouvant être gérée en parallèle d'autres structures locales. Ce mécanisme de sauvegarde en local permet une gestion plus aisée de plusieurs applications interactives en parallèle.

Selon l'invention, le périphérique interactif peut avantageusement être un élément parmi : une table interactive, une surface interactive, un cockpit de véhicule terrestre (voiture, camion, train, bateau,...) équipé d'un ordinateur de bord reliés à de nombreux capteurs. On peut aussi imaginer appliquer l'invention selon l'invention à une salle interactive équipée de caméra, détecteurs de mouvement et autres. En fait, le périphérique interactif peut être tout environnement composé d'une collection de capteurs d'interaction pouvant être ajoutés ou retirés dynamiquement.

Il est également proposé un outil de conception d'interfaces graphiques comprenant :
un ensemble de bibliothèques d'objets pour développer des interfaces et des applications graphiques,
au moins un éditeur pour définir des ressources graphiques et des dispositifs d'entrée, et
un moteur d'exécution (« runtime ») fournissant un environnement d'exécution sur différentes plateformes cibles.

Cet outil est caractérisé par la mise en oeuvre du procédé tel que décrit précédemment.

La présente invention prévoit également une table interactive gérée par une application interactive obtenue par un procédé tel que décrit précédemment.

Avec ces caractéristiques avantageuses, la présente invention permet un développement rapide et peu coûteux d'applications interactives destinées particulièrement aux surfaces interactives à écran tactile d'une façon générale.

D'autres avantages et caractéristiques de l'invention apparaîtront à l'examen de la description détaillée d'un mode de mise en oeuvre nullement limitatif, et des dessins annexés, sur lesquels :
La figure 1 est une vue d'ensemble schématique de composants applicatifs d'une surface interactive;
La figure 2 est une vue schématique d'un ensemble d'onglets pour un écran automobile selon une représentation arborescente conformément à un outil de développement nommé Intuikit ;
La figure 3 est une vue illustrant un arbre correspondant à la vue de la figure 2 ;
La figure 4 est une vue du même arbre qu'illustré sur la figure 3 mais associé cette fois-ci à un autre fichier graphique de type SVG ; et
La figure 5 est une vue illustrant le comportement d'un bouton 3-états ;
La figure 6 est une vue schématique d'un arbre général et d'un arbre local selon la présente invention ;
La figure 7 est une vue schématique illustrant la façon dont on décrit un ensemble de dispositifs d'entrée dans un arbre général ;
La figure 8 est une vue illustrant schématiquement une structure interne d'un appareil Wacom® ;
La figure 9 est une vue d'un exemple d'utilisation d'une surface interactive pour le contrôle de trafic aérien ; et
La figure 10 est une vue schématique illustrant le déplacement d'objets graphiques sur une surface interactive.

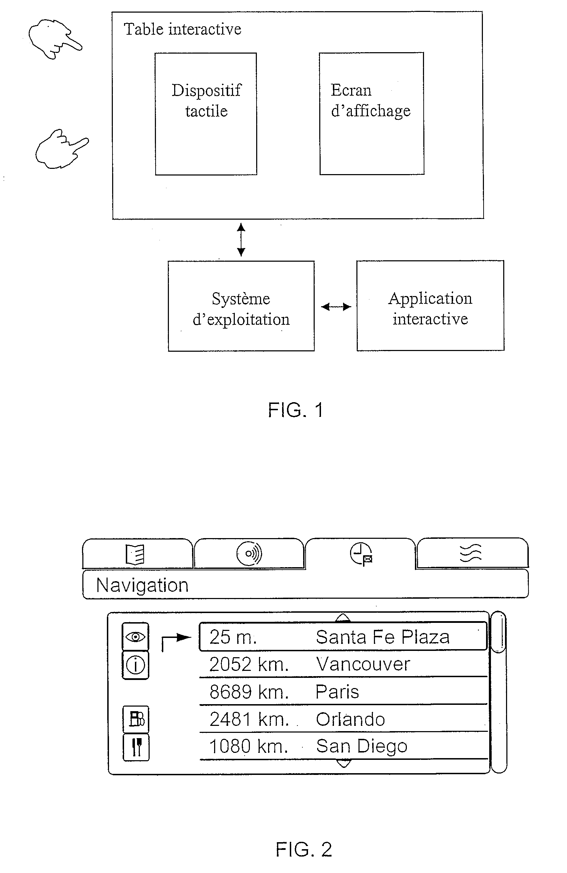

Sur la figure 1, on voit de quelle façon une application interactive selon la présente invention s'intègre dans un système de surface interactive. Une telle surface interactive comporte un dispositif d'affichage vidéo ainsi qu'un dispositif tactile associé. Un système d'exploitation permet de mettre en oeuvre une application interactive selon la présente invention. Cette application interactive permet d'animer des objets graphiques affichés sur la surface interactive en fonction notamment des dispositifs d'entrée. Des doigts d'un ou plusieurs utilisateurs constituent ces dispositifs d'entrée. A la place des doigts on peut aussi utiliser des stylets ou tous autres dispositifs permettant de désigner un emplacement sur l'écran avec ou sans contact de l'écran.

Une application interactive selon la présente invention est avantageusement développée au moyen d'un outil de conception tel que l'outil Intuikit® de la société Intuilab.

IntuiKit est un cadre pour le prototypage et le développement d'interfaces utilisateur de type post-WIMP (c'est à dire les interfaces utilisateur qui ne se fondent pas sur le paradigme de "Windows-Icon-Mouse-Pointing") aussi bien que des interfaces utilisateur multimodaux. Le but d'IntuiKit est non seulement de rendre la programmation de telles interfaces faisable, mais de rendre leur conception, développement et déploiement assez rentables pour que les industries non spécialisées puissent également y avoir accès. En particulier, afin de permettre la réutilisation des éléments de conception en commutant du prototypage au développement final, IntuiKit se fonde sur une architecture dite « model-driven » : autant que possible l'interface utilisateur est faite à partir de données obtenues par instanciation des modèles. Les modèles résultants d'interface peuvent « être rendus » par différentes implémentations du cadre : l'un visant le prototypage (une interface de programmation en Perl par exemple), et l'autre visant un déploiement industriel (une interface en C++ par exemple). La modélisation concerne les objets graphiques, mais également les éléments de l'architecture, le comportement et la commande, la trajectoire d'animation, les grammaires de la parole, etc.

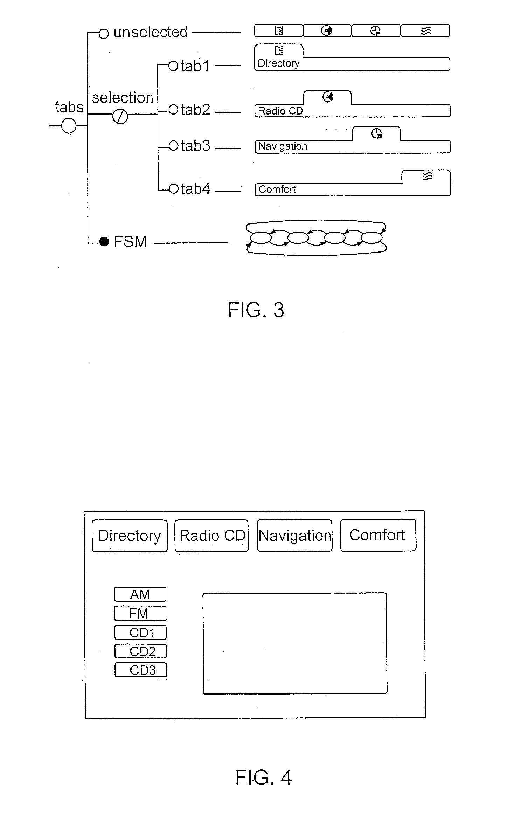

IntuiKit considère une application interactive comme un arbre des éléments. La gestion de l'arbre, ses parcours et la communication entre les éléments sont contrôlés par le noyau d'IntuiKit. Des éléments terminaux sont fournis par des modules d'IntuiKit, qui sont en charge de leur « rendu » ou de la mise à jour de leur « rendu » sur des modifications. Par exemple, le module GUI contrôle des éléments graphiques de la norme SVG ; le module de la parole contrôle des éléments qui représentent des règles de grammaire ; le module d'animation contrôle la détection de trajectoire et de collision ; le module de base contrôle des éléments qui aident à décrire le comportement de l'interface, telle que des horloges et des machines à états finis. Des éléments plus complexes appelés des composants peuvent être réalisés en assemblant d'autres éléments. Par exemple, un simple composant bouton peut être obtenu en combinant une machine à états finis (FSM), un élément spécial qui rend seulement un de ses sous-arbres dépendant de l'état du FSM, et des séries de rectangles et des textes qui représentent les différents états du bouton. Les programmeurs peuvent également réaliser leurs propres composants en code, par exemple pour créer des objets du noyau fonctionnel qui peuvent communiquer avec le reste de l'application en utilisant les modèles architecturaux supportés par le noyau d'IntuiKit. Des parties d'un arbre qui constituent une application peuvent être chargées au moteur d'exécution à partir de fichiers XML, de ce fait tenant compte de l'apparence ou de la personnalisation. Par exemple, les onglets d'un système de navigation automobile de la figure 2 sont obtenues en chargeant un fichier donné de type SVG dans l'arbre présenté sur la figure 3, et la figure 4 est obtenu en chargeant un autre fichier SVG. Le même type de personnalisation basé sur le chargement d'élément peut être utilisé pour adapter aux écrans tactiles une application faite pour des ordinateurs de bureau : pour un bouton donné, on peut choisir de charger soit une stratégie de FSM qui implémente un « take off » ou une stratégie de FSM qui implémente un « land-on ».

La communication d'événement est un modèle de contrôle de flux alternatif à l'appel de fonction, qui peut être mise en application au dessus des appels de fonction classiques. Souvent, on juxtapose la communication par événement avec des appels de fonction dans des applications. Cependant, une caractéristique d'interaction-utilisateur, et particulièrement d'interaction de post-WIMP, est que les mêmes actions peuvent être déclenchées à partir de contextes très différents : entrée-utilisateur, animation, ou calculs du noyau fonctionnel. Pouvoir réutiliser des composants exige ainsi que l'on fournisse un modèle unique de communication pour tous ces contextes : sinon des fragments du code qui emploient différents mécanismes de communication ne peuvent pas être reliés facilement.

IntuiKit découpe tout le code en éléments qui communiquent par des événements. IntuiKit emploie le concept de source d'événement. Chaque source d'événement a deux composantes : son format de spécifications d'événement, et son contenu d'événement. Par exemple, la source « horloge » a un format de spécifications qui distingue les arrêts mono-coup et les temporisateurs périodiques, et accepte un argument dans le premier cas et deux dans le deuxième cas. Le contenu d'événement est un « timestamp », avec un nombre additionnel de répétition dans le deuxième cas. Certaines sources d'événement comme l'horloge sont globales à l'application et sont apportées par des modules d'IntuiKit. Les éléments sont également des sources ; ceci inclut les objets graphiques ou les FSMs, mais également n'importe quel composant élaboré par les programmeurs. Dans le dernier cas, le format de spécifications d'événement et le contenu d'événement dépendent de la structure du composant, et peuvent être adaptés aux besoins du client par le programmeur. Par exemple, on peut élaborer une zone de dialogue et la faire émettre des événements vides « OK » et « Cancel », ou un composant « wallclock » qui émet les événements « SECOND », « MINUTE » et « HOUR » qui contiennent l'heure du jour. En conclusion, les propriétés d'élément, telles que la largeur d'un rectangle, sont également des sources d'événement. Ceci sert de base à la communication de flux de données qui est donc un cas spécial de communication d'événement.

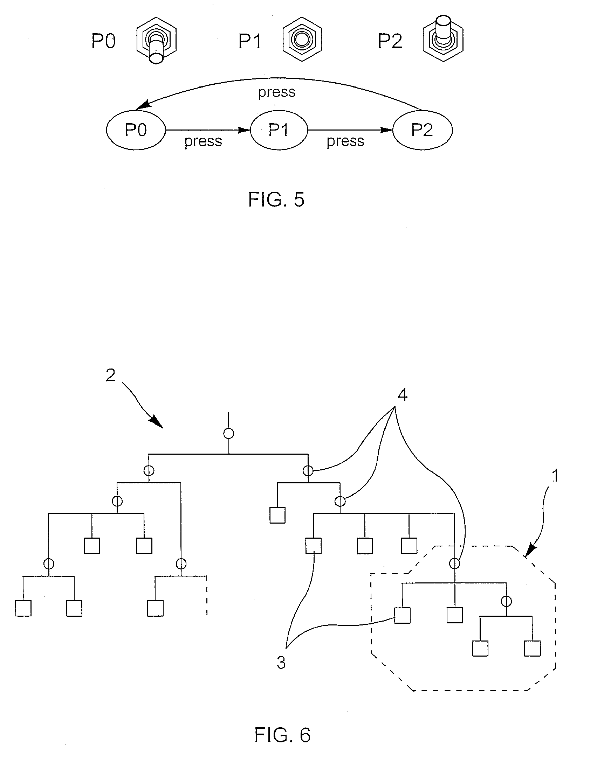

L'abonnement d'événement est obtenu en ajoutant des éléments spéciaux à l'arbre d'IntuiKit, ces éléments utilisant tous le même modèle : une référence à une source d'événement, une spécification d'événement, et une action. En d'autres termes, un abonnement consiste en une description des conditions pour lesquelles une partie d'une application doit réagir quand un événement apparaît. L'élément le plus simple est la « liaison » (« Binding »), qui lie des spécifications d'événement à une action. Les FSMs ajoutent l'état à cela : leurs transitions sont des liaisons qui sont seulement en activité dans des états donnés. Un « Connecteur » possède une spécification d'événement et une action implicites : sa source d'événement est une propriété d'élément, dont la valeur est utilisée pour mettre à jour une autre propriété d'élément quand elle change. Un « observateur » (« Watcher ») est utilisé à l'intérieur des composants ; il accepte plusieurs propriétés comme sources d'événement, et déclenche une action quand l'une ou plusieurs d'entre elles changent. Des observateurs sont utilisés pour mettre en application le rendu ; Les observateurs et les connecteurs sont utilisés pour produire la communication de flux de données : les filtres de flux de données modifient leurs propriétés de rendement dans les actions déclenchées par leurs observateurs. La figure 5 montre un FSM utilisé pour commander un bouton tige.

Sur la figure 6 on voit une représentation schématique de l'application interactive 1 selon la présente invention sous la forme d'un arbre local inséré dans un arbre général 2 représentant le système d'exploitation. Chaque bloc 3 est un élément de l'arbre local ou général. Chaque noeud 4 permet de regrouper dans un sous-arbre plusieurs éléments autres noeuds. L'application interactive 1 est un sous-arbre rattaché à l'arbre général 1 au moyen d'un noeud 4. Ainsi le principe de communication par échange d'événements sont identiques entre l'arbre général et l'arbre local.

Puisque les dispositifs sont des éléments, ils sont des sources d'événement et peuvent être utilisés dans des abonnements d'événement.

En accord avec le choix de faire de la communication d'événement le mécanisme de noyau de la gestion dans IntuiKit, la « dynamicité » des dispositifs d'entrée est gérée par des événements. IntuiKit possède un Ensemble (« Set ») d'éléments, qui contient d'autres éléments ; ajouter ou enlever un élément d'un ensemble déclenche un événement. En s'abonnant à un Ensemble en tant que source d'événement, on peut associer une action à l'ajout ou au retrait. L'ensemble de tous les dispositifs d'entrée est accessible par le nom général « input »; s'abonnement à lui permet d'être avisée de tous les nouveaux dispositifs reliés à l'ordinateur :

*new Binding(-source = > 'input', -spec = > 'add', ...);*

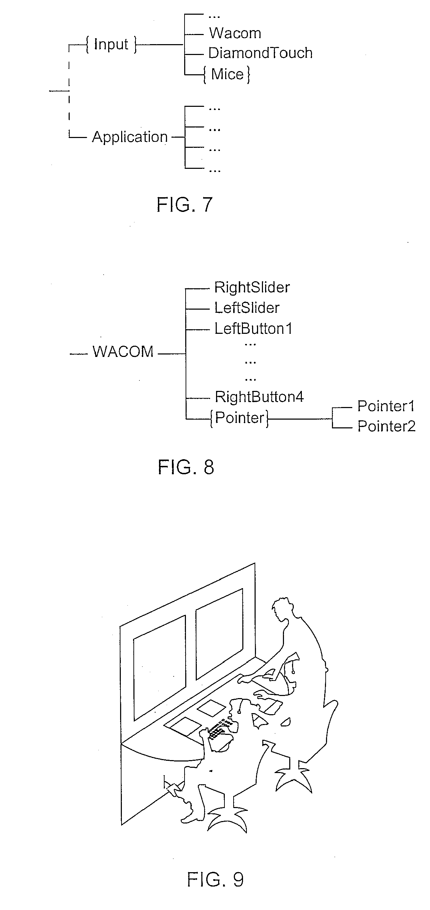

La figure 7 illustre un ensemble de dispositifs d'entrée dans l'arbre. Sous le noeud « input » sont rassemblés des surfaces interactives ainsi que des dispositifs souris.

Quand on utilise des souris, chacune d'elles est un dispositif d'entrée. Lorsqu'on utilise le périphérique tablette Wacom Intuos 2®, qui peut gérer deux stylets, la tablette en elle-même est le dispositif : le branchement sur l'ordinateur est un événement de connexion à chaud légitime, et on peut souhaiter s'abonner à tous les événements via la tablette. Néanmoins, on pourrait encore souhaiter être avisé lorsqu'un nouveau stylet est utilisé sur la tablette, et souscrire à tous les événements de ce nouveau stylet par cette tablette. Il en est de même pour un périphérique DiamondTouch® et ses quatre utilisateurs ; il devient bien plus complexe quand on emploie un algorithme de suivi pointeur, de le suivre parmi les multiples pointeurs possibles d'un même utilisateur sur le périphérique DiamondTouch®.

L'arbre selon la présente invention fournit le cadre approprié pour décrire ceci. En considérant des dispositifs comme éléments d'IntuiKit qui peuvent contenir d'autres éléments, on peut établir un modèle des dispositifs qui tient compte de toutes les situations ci-dessus : les dispositifs sont soit atomiques soit constitués de sous-dispositifs, comme des composants d'interaction peuvent être constitués de sous-composants. Par exemple, une souris est faite d'un repère et de plusieurs boutons. Une tablette Wacom Intuos 2® contient un ensemble de pointeurs. Un périphérique DiamondTouch® contient un ensemble d'utilisateurs, et chacun contient probablement un ensemble de pointeurs. On peut s'abonner à l'apparition d'un nouveau pointeur par abonnement à l'ensemble de tous les dispositifs dans le premier cas, ou à l'ensemble de pointeurs contenus dans le dispositif dans l'autre second cas.

Sur la figure 8 on voit un peu plus en détail la description des dispositifs d'entrée au sein de la tablette interactive Wacom®. On remarque qu'il s'agit bien d'une représentation hiérarchique sous la forme d'un arbre.

Avec cette vue hiérarchique des dispositifs, tout composant interactif peut être composé de sous-composants. Elle fournit également une base utile pour traiter l'équivalence et la combinaison de dispositifs lors de la détection et de l'adaptation de la configuration d'entrée pour une réutilisation de composants ou d'applications.

Avec une surface interactive, la question centrale de réutilisation est actuellement celle de la structure et des spécifications de dispositif. Il n'y a aucune norme pour les dispositifs comme ce fut le cas, explicitement ou non, pour des souris et des claviers. Une souris de base se compose toujours d'un repère et d'un ou plusieurs boutons à deux états. Une surface interactive peut distinguer ou non des utilisateurs, détecter ou non la proximité, fournir les histogrammes de X et de Y de la surface de contact ou des contours de tous les points de contact, etc. En outre, ces dispositifs et périphériques sont encore chers et les programmeurs doivent souvent les simuler avec des souris lors du développement des applications. Et enfin, il n'y a aucune raison pour qu'un composant interactif développé pour un écran tactile ou un ordinateur de bureau ne puisse pas être réutilisé sur une surface interactive. Pour toutes ces raisons, la capacité de détecter et adapter la configuration d'entrée est intéressante pour la réutilisation des applications ou des composants. Détecter la configuration d'entrée disponible pour une application sur un ordinateur commence par la capacité de localiser les dispositifs connectés sur l'ordinateur. Comme vu précédemment, il n'y a aucune norme sur la façon dont des surfaces interactives sont structurées. En outre, plusieurs périphériques de la même marque peuvent avoir des dispositifs différents. Par exemple, une tablette Wacom Intuos 2® accepte deux stylets à la fois, tandis qu'un écran à stylet Wacom Cintiq® a un protocole semblable, peut être géré avec le même pilote mais ne peut manipuler qu'un seul stylet. Par conséquent, afin d'utiliser un dispositif donné avec une application, on doit accéder à sa structure pour l'inspecter ou pour s'y connecter.

Le mécanisme d'encapsulation permet au programmeur d'un composant de choisir les propriétés et les parties du composant à rendre visibles de l'extérieur, et sous quels noms. Les programmeurs qui utilisent un élément peuvent énumérer ses propriétés exportées, fils et événements. Il est également possible d'y accéder directement : événements par abonnement direct, et propriétés et enfants comme suit :

*$set = $dev- >get (-child => 'pointers');*

*$x = $pointer->get (-property => 'x');*

On prévoit de vérifier que la séquence d'événements qu'un élément peut émettre est compatible avec le format d'entrée d'un composant qui s'y abonne.

L'encapsulation fonctionne quand l'équivalence entre les dispositifs peut être obtenue par de simples changements de noms et dissimulation de l'information. Cependant, le plus souvent la situation est plus complexe : pour rendre un dispositif donné compatible avec d'autres, on a souvent besoin de combiner des attributs d'événement, de mémoriser une information d'un événement vers un autre, ou d'exécuter des calculs. Par exemple, le repère d'une souris est un repère relatif. Pour rendre la souris compatible avec un composant qui requiert des événements d'un écran tactile, on a besoin d'appliquer une loi d'accélération aux translations de la souris, pour stocker une position absolue qui est incrémentée à chaque mouvement, pour appliquer une fonction de gradation, et pour adapter le résultat afin de rester dans le cadre limite de l'écran. Pour simuler un écran tactile multi-utilisateurs avec un périphérique DiamondTouch®, on doit calculer les barycentres des histogrammes de X et de Y qu'il fournit pour chaque utilisateur. On doit même parfois combiner plusieurs dispositifs pour en simuler d'autres, par exemple quatre souris pour simuler un périphérique DiamondTouch®.

La présente invention utilise le mécanisme de filtrage. Ce mécanisme utilise le fait que tous les éléments peuvent être des sources d'événement pour avoir une organisation semblable aux connexions de flux de données : un élément se tient comme frontal pour un autre élément et agit en tant que relais pour des abonnements d'événement. Le filtrage peut être combiné avec l'encapsulation : un filtre peut être un composant qui encapsule la source originale, de ce fait le dissimule au reste de l'application. Dans tous les cas, l'élément filtrant a son propre format de spécifications d'événement, ce qui lui permet de donner sa propre version des types d'événements disponibles. Par exemple, un filtre pour un DiamondTouch® peut fournir le format d'abonnement d'une souris s'il applique le calcul de barycentre mentionné ci-dessus. Quelques filtres relayent juste des abonnements d'événement et n'effectuent pas une quelconque opération sur les événements : ils fournissent juste une autre manière d'abonnement. Mais la plupart des filtres appliquent une transformation des événements : changement de nom des attributs d'événement, ou calculs pour créer de nouveaux attributs.

Le filtrage est utilisé pour insérer la reconnaissance gestuelle : les positions fournies dans les événements par des dispositifs pointeurs sont mémorisées dans le filtre, puis un algorithme de classification est appliqué lorsque le bouton ou la pression est libéré. Le filtrage tient également compte du « picking », l'opération dans laquelle chaque événement de pointeur est associé à un objet graphique basé sur des considérations géométriques, et qui permet l'abonnement aux événements de pointeur en adressant les objets graphiques eux-mêmes. Avoir ce mécanisme explicite est avantageux dans des systèmes multi-touches : il permet à tous pointeurs d'être associés à la scène graphique, en les reliant au filtre « picking » dès qu'ils seront détectés. Le filtrage est également utilisé pour effectuer la configuration d'entrée. Comme déjà mentionné, un DiamondTouch® peut être filtré en appliquant un calcul de barycentre à ses événements afin de simuler le comportement d'une souris ou d'un écran tactile. Il peut également être filtré en utilisant un algorithme de cheminement qui extrait les points de contact multiples à partir des données fournies par le DiamondTouch®, fournissant ainsi une source multi-touches au sein d'un système multi-utilisateurs.

L'adressage du dispositif et les mécanismes de configuration d'entrée dans IntuiKit fournissent à des programmeurs une manière flexible d'accéder et de contrôler des dispositifs à entrées multiples. Il est surtout intéressant pour avoir plusieurs interactions en parallèle.

A cette fin, le cadre de programmation de la présente invention fournit une nouvelle manière d'ajouter de nouvelles sources d'entrée qui peuvent émettre des événements de façon asynchrone. IntuiKit a une boucle principale extensible qui peut gérer de façon asynchrone toute source d'entrée contrôlée par le système d'exploitation.

L'architecture proposée par la présente invention, basée sur un arbre des composants contenant des propriétés et communiquant par des événements, est une incitation forte à l'élaboration d'applications sous forme de collection de composants qui sauvegardent leur état localement et se comportent en tant qu'agents parallèles.

La figure 9 illustre un exemple d'application dans le domaine de la commande de trafic aérien. L'application vise à concevoir une grande surface horizontale où deux contrôleurs ou plus peuvent partager des outils et des données, échanger des informations. L'avantage recherché est la capacité d'ajuster leur répartition de charges en temps réel afin de s'adapter aux situations et améliorer leur performance globale. Les contrôleurs peuvent directement déplacer les objets graphiques sur l'écran tactile.

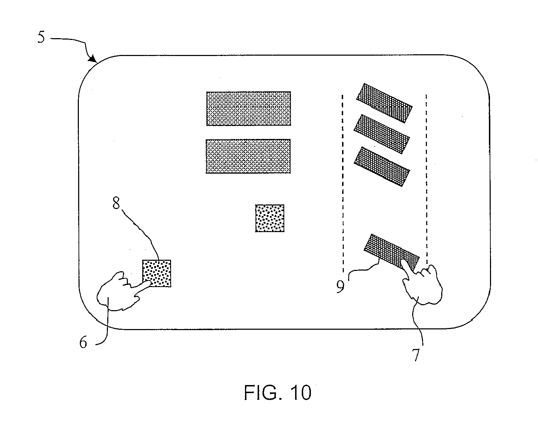

Sur la figure 10, on voit un écran tactile 5 multi-utilisateurs comprenant plusieurs objets graphiques. Un contrôleur peut utiliser simultanément deux de ses doigts 6 et 7 pour déplacer dans des directions quelconques deux objets graphiques différents 8 et 9.

Bien sûr, l'invention n'est pas limitée aux exemples qui viennent d'être décrits et de nombreux aménagements peuvent être apportés à ces exemples sans sortir du cadre de l'invention.

## Revendications

1. Procédé pour élaborer une application graphique interactive destinée à gérer un périphérique interactif, ce périphérique interactif acceptant une pluralité de dispositifs d'entrée ; dans lequel procédé :
on élabore l'architecture de la dite application graphique interactive en tant qu'une structure de données, dite structure locale, comprenant des noeuds et des éléments, la communication entre éléments se faisant par échange d'événements,
on élabore la communication entre l'application graphique interactive et son environnement extérieur en considérant que cet environnement extérieur possède également une architecture du même type que ladite structure de données, dite structure générale, et
on élabore les dispositifs d'entrée en tant que des éléments extérieurs à la structure locale.

2. Procédé selon la revendication 1, **caractérisé en ce que** ladite structure de données est un arbre.

3. Procédé selon la revendication 1 ou 2, **caractérisé en ce que** l'application graphique interactive est conçue de telle sorte que l'apparition et la disparition d'un dispositif d'entrée est équivalent à l'apparition ou la disparition d'un noeud de la structure générale.

4. Procédé selon l'une quelconque des revendications précédentes, **caractérisé en ce qu'**au sein de l'application graphique interactive, le périphérique interactif et ses dispositifs d'entrée sont considérés comme regroupés au sein d'une sous structure de la structure générale.

5. Procédé selon l'une quelconque des revendications précédentes, **caractérisé en ce qu'**on réalise une encapsulation d'un noeud supportant au moins un dispositif d'entrée de sorte que l'environnement extérieur à ce noeud encapsulé ne voit qu'une partie des propriétés dudit au moins un dispositif d'entrée.

6. Procédé selon l'une quelconque des revendications précédentes, **caractérisé en ce qu'**on réalise un filtrage d'un noeud comprenant plusieurs éléments de façon à modifier les événements échangés entre les éléments compris dans ce noeud filtré et l'environnement extérieur à ce noeud filtré.

7. Procédé selon l'une quelconque des revendications précédentes, **caractérisé en ce que** pour une communication avec des éléments distants hors structure générale, on transmet des événements via un bus de messagerie.

8. Procédé selon l'une quelconque des revendications précédentes, **caractérisé en ce qu'**on sauvegarde au sein de la structure locale l'état des éléments faisant partie de cette structure locale, chaque structure locale pouvant être gérée en parallèle d'autres structures locales.

9. Procédé selon l'une quelconque des revendications précédentes, **caractérisé en ce que** le périphérique interactif est un élément parmi : une table interactive, une surface interactive, un cockpit de véhicule terrestre et tout environnement composé d'une collection de capteurs d'interaction pouvant être ajoutés ou retirés dynamiquement.

10. Outil de conception d'interfaces graphiques comprenant :
un ensemble de bibliothèques d'objets pour développer des interfaces et des applications graphiques,
au moins un éditeur pour définir des ressources graphiques et des dispositifs d'entrée, et
un moteur d'exécution fournissant un environnement d'exécution sur différentes plateformes cibles,
**caractérisé par** la mise en oeuvre du procédé selon l'une quelconque des revendications précédentes.

11. Table interactive gérée par une application interactive obtenue par un procédé selon l'une quelconque des revendications 1 à 7.
